Europäisches Patentamt

European Patent Office

Office européen des brevets

(11) Veröffentlichungsnummer: **0 470 537 A1**

# EUROPÄISCHE PATENTANMELDUNG

(21) Anmeldenummer: **91113087.0**

(22) Anmeldetag: **03.08.91**

(51) Int. Cl.5: **A61C 11/00**

(30) Priorität: **07.08.90 DE 4024978**
**12.04.91 DE 4111953**

(43) Veröffentlichungstag der Anmeldung:
**12.02.92 Patentblatt 92/07**

(84) Benannte Vertragsstaaten:
**AT BE CH DE DK FR GB IT LI LU NL SE**

(71) Anmelder: **Feher, Tibor, Dr.**
**Blumenstrasse 9**
**W-4000 Düsseldorf(DE)**

(72) Erfinder: **Feher, Tibor, Dr.**
**Blumenstrasse 9**
**W-4000 Düsseldorf(DE)**

(74) Vertreter: **Sparing Röhl Henseler**
**Patentanwälte European Patent Attorneys**
**Rethelstrasse 123**
**W-4000 Düsseldorf 1(DE)**

(54) **Artikulator für Kiefermodelle.**

(57) Die Erfindung betrifft eine Vorrichtung zur instrumentellen Modellanalyse, bestehend aus einem Unterkieferteil (100) und einem schwenkbar auf diesem gelagerten Oberkieferteil (200) zum Simulieren der Scharnierbewegung eines Unterkiefers und ein Verfahren hierzu. Das Unterkieferteil umfaßt eine Grundplatte (1) mit zwei senkrecht sich erstreckenden, Kondylarköpfe (10) tragende Säulen (2, 3), wobei die Verbindungsachse der Kondylarköpfe die instrumentelle Scharnierachse bilden. Um ein Justieren der instrumentellen Scharnierachse zu erreichen, sind die Kondylarköpfe einzeln dreidimensional verstellbar.

FIG. 1

Die Erfindung betrifft eine Vorrichtung und ein Verfahren zur instrumentellen Modellanalyse nach dem Oberbegriff der Ansprüche 1 und 6.

Derartige Vorrichtungen sind beispielsweise von den Arcon-Artikulatoren bekannt. Das Unterkieferteil wird dort von einer im allgemeinen T-förmigen Grundplatte gebildet, die auf einem rückseitigen Arm zwei auf einen individuellen Abstand einstellbare Säulen mit Kondylarköpfen an ihren äußeren Enden trägt. Die beiden fluchtenden Kondylarköpfe definieren eine instrumentelle Scharnierachse. Zentrische Angriffsflächen an den Kondylarköpfen ermöglichen das Angreifen einer achsenausgerichteten Transfereinrichtung, um die am Patienten abgegriffene arbiträre oder individuelle Scharnierachse zur instrumentellen Scharnierachse des Unterkieferteils ausrichten zu können. Der Modellträger für das Unterkiefermodell ist auf einem nach vorne sich erstreckenden Arm der Grundplatte befestigt.

Das Montieren des Unterkiefermodells in der gelenkbezogenen Lage mittels einer Transfereinrichtung in den Unterkieferteil erfordert höchste Präzision. Das hierzu notwendige Sockeln des Unterkiefermodells wird unter Verwendung spezieller Formmassen durchgeführt. Diese Massen erhärten schnell und sind relativ formstabil. Dennoch schleichen sich beim Sockeln des Unterkiefermodells immer wieder Fehler ein, für die im allgemeinen eine verbleibende Expansion oder Distraktion der zum Sockeln verwendeten Massen verantwortlich sind. Diese Fehler bewirken, daß nach dem Sockeln die an der Transfereinrichtung eingestellte Scharnierachse nicht mehr korrekt zur instrumentellen Scharnierachse ausgerichtet ist.

Desweiteren erlauben die bekannten Unterkieferteile der bekannten Vorrichtungen keine Korrektur der instrumentellen Scharnierachse zum Ausgleich einer am Patienten festgestellten Kondylusverlagerung, insbesondere einer Kompression.

Aufgabe der Erfindung ist es daher, eine Vorrichtung und ein Verfahren der genannten Art zu schaffen, die ein Justieren der instrumentellen Scharnierachse erlauben.

Diese Aufgabe wird gemäß dem kennzeichnenden Teil der Ansprüche 1 und 6 gelöst.

Hierdurch wird eine Vorrichtung geschaffen, deren Unterkieferteil durch eine dreidimensionale individuelle Verstellbarkeit der Kondylarköpfe eine Änderung der instrumentellen Scharnierachse am Unterkieferteil erlaubt, wobei eine Änderung der räumlichen Lage und der Neigung der instrumentellen Scharnierachse möglich ist. Dies kann zum Ausgleich einer am Patienten festgestellten Kondylusverlagerung beim Arbeiten mit einer arbiträren Scharnierachse oder Nachjustieren einer am gesockelten Unterkiefermodell fixierten Scharnierachse erfolgen.

Dabei können die Kondylarköpfe von Säulen getragen werden, die von mindestens zwei ineinander verschiebbaren Teilsäulen gebildet werden, wodurch eine sichere, räumlich festgelegte Führung der Kondylarsäulen für eine Höhenverstellung erreicht wird. Diese Führung kann weiterhin noch dadurch verbessert werden, daß die Teilsäulen doppelarmig ausgebildet sind. Die individuelle Verstellbarkeit der Kondylarköpfe kann durch eine Verstellbarkeit der den jeweiligen Kondylarkopf tragenden Säule in einer ersten und Zweiten Richtung und durch eine Verstellbarkeit des Kondylarkopfes selbst gegenüber der Säule in einer dritten Richtung erfolgen, wobei die drei Richtungen jeweils senkrecht zueinander verlaufen, also ein orthogonales Dreibein bilden. Eine derartige dreidimensionale Verstellbarkeit der Kondylarköpfe gewährleistet eine hohe Präzision des Justierens durch räumliches Verstellen der instrumentellen Scharnierachse.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1    zeigt eine Seitenansicht einer Vorrichtung zur instrumentellen Modellanalyse mit einem Unterkieferteil und einem Oberkieferteil,

Fig. 2    zeigt eine Draufsicht des Unterkieferteils,

Fig. 3    zeigt teilweise geschnitten eine Vorderansicht des Unterkieferteils,

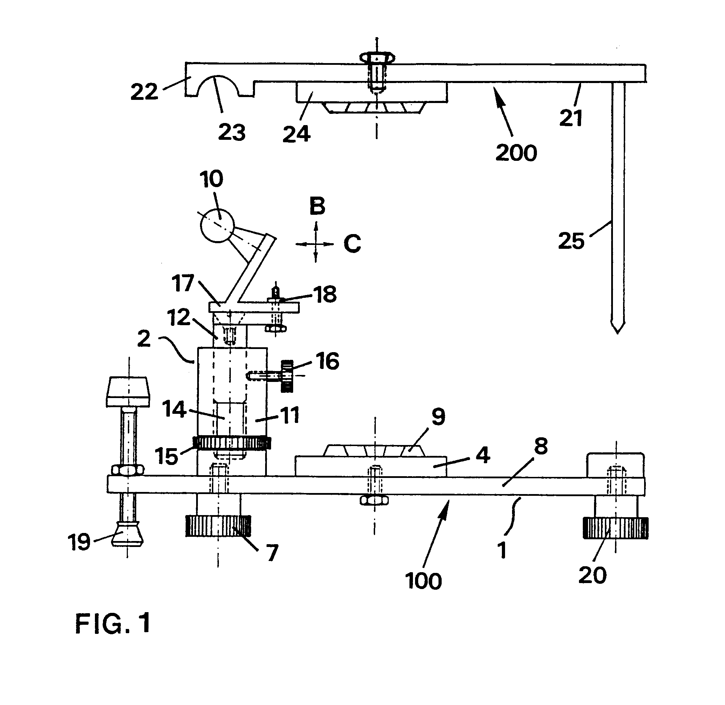

Figur 1 zeigt eine Vorrichtung zur instrumentellen Modellanalyse mit einem Unterkieferteil 100 und einem Oberkieferteil 200, die den menschlichen Unter- und Oberkiefer nachbilden. Das vom Unterkieferteil 100 losgelöst dargestellte Oberkieferteil 200 ist schwenkbar auf eine vom Unterkieferteil 100 definierten instrumentellen Scharnierachse aufsetzbar, wodurch mit der Vorrichtung die Scharnierbewegung des Unterkiefers simulierbar ist.

Wie in den Figuren 1 bis 3 dargestellt, umfaßt das Unterkieferteil eine Grundplatte 1, auf der zwei vertikal sich erstreckende Säulen 2, 3 und ein Modellsockel 4 in einem T-förmigen Grundriß angeordnet sind. Bezüglich der Grundplatte 1 können die Säulen 2, 3 einzeln dreidimensional verstellbar ausgebildet sein und sind hierzu vorzugsweise identisch aufgebaut.

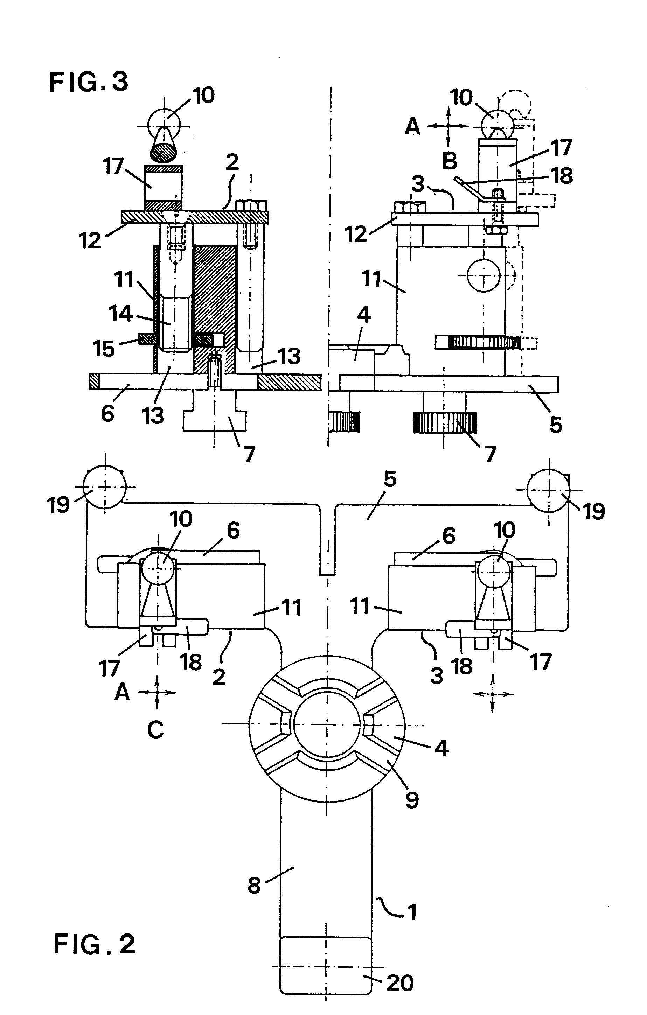

Gemäß Figur 2 besitzt die Grundplatte 1 einen rückseitigen Querarm 5 mit zwei in Querrichtung zueinander fluchtenden Schlitzen 6. Entlang der Schlitze 6 sind die Säulen 2, 3 bodenseitig auf der Grundplatte 1 geführt und in einer ersten Richtung A gegeneinander verschiebbar angeordnet. Der Abstand der beiden Säulen 2, 3 ist individuell einstellbar. Mittels jeweils einer Feststellschraube 7 sind die Säulen 2, 3 in einem wählbaren Abstand arretierbar. Auf einem nach vorne sich erstreckenden Arm 8 der Grundplatte 1 ist der Modellsockel 4 befestigt. Der Modellsockel 4 bildet einen Sekundärsockel, der auf seiner mit einem Primärsockel in Eingriff tretenden Oberfläche einzelne Erhebungen 9 aufweist, die mit Kerben in der Bodenfläche des befestigbaren Primärsockels in Eingriff bringbar sind. Auf diese Weise können Primärsockel, auf denen ein Zahnbogenmodell gesockelt wurde, entfernt und auf dem Unterkieferteil 100 wiederbefestigt werden, wobei die Reproduzierbarkeit der eingestellten Position garantiert wird (Quicksplit-Magnetofix-System).

Wie insbesondere aus Figur 1 ersichtlich ist, bestehen die Säulen 2, 3 jeweils aus mindestens zwei ineinander verschiebbaren Teilsäulen, die im wesentlichen senkrecht zur Grundplatte 1 ausgerichtet sind. Die Teilsäulen werden hier von einer Außensäule 11 und einer einen Kondylarkopf 10 tragenden Innensäule 12 gebildet. Die Außensäule 11 ist wie vorstehend beschrieben über die Feststellschraube 7 in einer wählbaren Position entlang des Schlitzes 6 auf der Grundplatte 1 befestigbar. Zur Aufnahme der Innensäule 12 besitzt die Außensäule 11 mindestens eine in Richtung B verlaufende Führungsnut 13, in der die Innensäule 12 als Gleitkörper verschiebbar eingesetzt ist (vgl. Fig. 3). Zur Verschiebung der Innensäule 12 gegenüber der Außensäule 11 besitzt die Innensäule 12 einen Gewindeabschnitt 14, auf dem eine in die Außensäule 11 eingelegte Rändelmutter 15 sitzt. Durch Betätigung der Rändelmutter 15 kann die Höhe der Säulen 2, 3 individuell eingestellt werden. Die gewählte Höhe kann mittels einer Feststellschraube 16 blockiert werden. Die Säulen 2, 3 sind damit in der Richtung A seitlich verschiebbar und durch eine Verschiebbarkeit in Richtung B höhenverstellbar.

Wie insbesondere aus Figur 1 ersichtlich, ist auf jeder Säule 2, 3 ein Kondylarkopf 10 angeordnet, der eine kugel- oder walzenförmige Umfangsfläche besitzen kann. Die Verbindungsachse der Kondylarköpfe 10 bildet die instrumentelle Scharnierachse. Über die Verstellbarkeit der Säulen 2, 3 in den vorzugsweise senkrecht zueinander verlaufenden Richtungen A und B werden die Kondylarköpfe 10 räumlich verändert und damit auch die instrumentelle Scharnierachse. Gemäß Figur 3 sind die Innensäulen 12 doppelarmig ausgebildet, wodurch eine richtungsgenaue Höhenverstellung der Säulen 2, 3 sichergestellt wird.

Die Kondylarköpfe 10 sind jeweils über einen Schlitten 17 auf der Innensäule 12 befestigt. Die Schlitten 17 sind in einer dritten Richtung C senkrecht zu den Richtungen A und B verschiebbar an der Innensäule 12 geführt und können mittels jeweils einer Feststelleinrichtung 18 verstellbar befestigt werden (vgl. Fig. 1 und 2).

Die Standfläche des Unterkieferteils wird vorzugsweise von drei höhenverstellbaren Standfüssen 19, 20 aufgespannt.

Gemäß Figur 1 ist das Oberkieferteil 200 allgemein T-förmig ausgebildet mit einem nach vorne sich erstreckenden Arm 21. Der rückseitige Abschnitt des Arms 21 teilt sich in zwei nach außen sich erstreckende äußere Arme 22. In den äußeren Armen 22 ist jeweils eine Führungseinrichtung 23 angeordnet, die einen Sitz bilden für die Kondylarköpfe 10 des Unterkieferteils 100, um das Oberkieferteil 200 schwenkbar auf dem Unterkieferteil 100 zu lagern. Vorzugsweise sind die Führungseinrichtungen 23 als Pfannen, Kugelhalbschalen oder Zylinderhalbschalen ausgebildet, die ein Simulieren der reinen Scharnierbewegung des Unterkiefers erlauben. Wie die Grundplatte 1 des Unterkieferteils 100 trägt der Arm 21 einen Modellsockel 24, der wiederum den Sekundärsockel eines Quicksplit-Magnetofix-Systems bildet. Am vorderseitigen Abschnitt des Arms 21 kann ein das Oberkieferteil gegenüber dem Unterkieferteil aufstellender Stift 25 vorgesehen sein.

Ein Verfahren zur instrumentellen Modellanalyse mittels Ober- und Unterkieferzahnbogenmodelle unter Simulation der Scharnierbewegung eines Unterkiefers für eine Diagnose außerhalb des menschlichen Körpers kann wie folgt durchgeführt werden: Zunächst wird das Ober- oder Unterkieferzahnbogenmodell nach einer am Patienten abgegriffenen Scharnierachsenposition auf dem zugehörigen Modellsockel der vorstehend beschriebenen Vorrichtung gesockelt, mittels eines Stützstiftregistrats (erhalten durch eine Stützstiftregistrierung am Patienten) das jeweils andere Zahnbogenmodell zugeordnet und auf dem anderen zugehörigen Modelsockel gesockelt und nach Entfernen des Sützstiftregistrats durch Scharnierbewegung der Vorrichtung die Zahnbogenmodelle geschlossen.

Wird mit einer individuellen Scharnierachse zur instrumentellen Modellanalyse gearbeitet, kann die Bestimmung der Kieferrelation an vom Patienten hergestellten Ober- und Unterkieferzahnbogenmodellen wie folgt durchgeführt werden: Zunächst wird mittels einer Transfereinrichtung, z.B eines Gesichtsbogens, die individuelle Scharnierachse abgegriffen. Eine die individuelle Scharnierachsenposition abgreifende Transfereinrichtung wird mit ihren Spitzen in zentrische Angriffsflächen an den Kondylarköpfen 10 eingesetzt und das Unterkieferzahnbogenmodell auf dem Unterkieferteil gesockelt. Nach dem Härten der Sockelmasse wird geprüft, ob für das gesockelte Unterkiefermodell die Spitzen der achsenausgerichteten Transfereinrichtung noch paßgenau in den zentrischen Angriffsflächen der Kondylarköpfe sitzen. Werden Abweichungen festgestellt, erfolgt eine individuelle Veränderung der Lage der Kondylarköpfe 10 in eine oder mehrere der Richtungen B, C, wobei die achsenausgerichtete Transfereinrichtung mit dem gesockelten Unterkiefermodell als Referenz dient. Hierdurch wird sichergestellt, daß die bestimmte physiologische Scharnierachse des Unterkiefers gleich der instrumentellen Scharnierachse bei dem Unterkiefermodell ist. Zur Ermittlung der idealen Schlußbißstellung wird das Oberkieferzahnbogenmodell durch ein Stützstiftregistrat, das mittels einer Stützstiftbißnahme am Patienten abgegriffen wurde, zugeordnet und in dieser Stellung an dem schwenkbeweglich auf dem Unterkieferteil gelagerten Oberkieferteil gesockelt. Danach wird das Stützstiftregistrat entfernt und die Zahnbogenmodelle in der am Ober- und Unterkieferteil fixierten Stellung aufeinandergesetzt. Diese Stellung ist die von den Kiefergelenken vorgegebene Schlußbißstellung, an die die Zahnoberflächen der Zahnbogenmodelle anzupassen sind.

Das Stützstiftregistrat, das auf dem Grundsatz der dynamischen Dreipunktabstützung des Unterkiefers am Schädel beruht, ist an sich bekannt und beispielsweise beschrieben in "Zahnärztliche Prothetik" von Karlheinz Körber, Georg Thieme Verlag 1985, S. 126 bis 128.

Wird mit einer arbiträren Scharnierachse zur instrumentellen Modellanalyse gearbeitet, kann die Bestimmung der Kieferrelation an vom Patienten hergestellten Ober- und Unterkieferzahnbogenmodellen wie folgt durchgeführt werden:
Zunächst wird mittels einer Transfereinrichtung, z.B. eines Gesichtsbogens, eine arbiträre Scharnierachse am Patienten abgegriffen und dementsprechend das Oberkiefermodell achsengerecht am auf den Unterkieferteil schwenkbeweglich gelagerten Oberkieferteil gesockelt. Dies erfolgt derart, daß die Transfereinrichtung an dem Unterkieferteil unter Angriff an den Kondylarköpfen befestigt wird und eine von ihr getragene Bißgabel am Unterkieferteil eingegipst wird. Daraufhin wird das Oberkieferzahnbogenmodell unter Eingriff in die am Patienten abgegriffenen Impressionen auf die Bißgabel gesetzt. In dieser Stellung wird das Oberkieferzahnbogenmodell am schwenkbeweglich gelagerten Oberkieferteil gesockelt. Mittels eines Stützstiftregistrats wird das Unterkieferzahnbogenmodell zugeordnet und an dem Unterkieferteil gesockelt. Nach dem Härten der Sockelmasse wird das Stützstiftregistrat entfernt.

Ist eine ein- oder beidseitige Kompression, Arthrose oder dergleichen vorab diagnostiziert worden, wird die dem jeweiligen Kondylarkopf 10 zugeordnete Kondylarsäule 12 erhöht, um die Kompression, Arthrose oder dergleichen instrumentell auszugleichen. Das Maß der Erhöhung wird derart gewählt, daß die vertikale Fehlstellung weitgehend vollständig beseitigt wird. Die instrumentelle Scharnierachse entspricht nunmehr der individuellen Scharnierachse des Patienten oder ist dieser angenähert unter zumindest Beseitigung eines pathologischen Zustandes, beispielsweise einer Kompression. Die so erreichte Stellung ist eine therapeutische Stellung für die Anfertigung eines Aufbißbehelfs.

**Patentansprüche**

1. Vorrichtung zur instrumentellen Modellanalyse, bestehend aus einem Unterkieferteil mit einer Grundplatte als Träger für ein Zahnbogenmodell und zwei mit Abstand vertikal sich erstreckender und jeweils einen Kondylarkopf tragender Säulen, wobei die Kondylarköpfe eine instrumentelle Scharnierachse definieren, entlang dem ein Oberkieferteil mit einer Grundplatte als Träger für ein Zahnbogenmodell schwenkbar gelagert ist, dadurch gekennzeichnet, daß die räumliche Lage eines jeden Kondylarkopfs (10) einzeln dreidimensional verstellbar ist.

2. Vorrichtung nach Anspruch 1, dadurch gekennzeichnet, daß die Säulen (2, 3) jeweils in einer ersten und zweiten Richtung A und B verschiebbar sind, während die Kondylarköpfe (10) gegenüber der jeweiligen Säule (2, 3) in einer dritten Richtung C verschiebbar sind, wobei die Richtung A, B, C jeweils senkrecht aufeinander stehen.

3. Vorrichtung nach Anspruch 1 oder 2, dadurch gekennzeichnet, daß die Säulen (2, 3) von mindestens zwei ineinander verschiebbaren Teilsäulen (11, 12) gebildet werden, und die Innensäule (12) kopfseitig einen Kondylarkopf (10) trägt.

4. Vorrichtung nach Anspruch 3, dadurch gekennzeichnet, daß die Innensäule (12) doppelarmig in Ausnehmungen (13) der Außensäule (11) geführt ist.

5. Vorrichtung nach einem der Ansprüche 1 bis 4, dadurch gekennzeichnet, daß die Kondylarköpfe (10) jeweils mittels arretierbarer Schlitten (17) auf den Säulen (2, 3) verstellbar befestigt sind.

6. Verfahren zur instrumentellen Modellanalyse mittels Ober- und Unterkieferzahnbogenmodelle, bei dem zunächst das Ober- oder das Unterkieferzahnbogenmodell nach einer am Patienten abgegriffenen Scharnierachsenpostion gesockelt wird, über ein Stützstiftregistrat das jeweils andere, schwenkbeweglich zur Modellscharnierachse gelagerte Zahnbogenmodell zugeordnet und ebenfalls gesockelt wird und danach die Scharnierbewegung simuliert werden.

7. Verfahren nach Anspruch 6, dadurch gekennzeichnet, daß das Unterkiefermodell nach einer am Patienten abgegriffenen kinematischen Scharnierachsenposition gesockelt und das Oberkiefermodell über ein Stützstiftregistrat zugeordnet wird.

8. Verfahren nach Anspruch 6, dadurch gekennzeichnet, daß das Oberkieferzahnbogenmodellnach einer am Patienten abgegriffenen arbiträren Scharnierachsenposition gesockelt, über ein Stützstiftregistrat das Unterkiefermodell zugeordnet und nach Entfernen des Stützstiftregistrats eine diagnostizierte vertikale Fehlstellung durch Verändern der räumlichen Lage der Modellscharnierachse ausgeglichen wird.

9. Verfahren nach Anspruch 8, dadurch gekennzeichnet, daß die Veränderung der räumlichen Lage durch ein- oder zweiseitige Verstellung in vertikaler Richtung erfolgt.

**FIG. 1**

FIG.3

FIG.2

**Europäisches Patentamt**

# EUROPÄISCHER RECHERCHENBERICHT

Nummer der Anmeldung

## EP 91 11 3087

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 627 077 (WAYSENSON) — — — | 6-9 | A 61 C 11/00 |
| A | FR-A-2 627 077 (* Zusammenfassung; Abbildungen *) — — — | 1 | |
| A | DE-A-2 950 442 (MEDICUBA) * Seite 7, Zeile 19 - Zeile 28; Abbildung 1 * * — — — | 1-9 | |
| A | US-A-4 303 390 (KRUGER) * Spalte 3, Zeile 33 - Zeile 40 * * * Spalte 4, Zeile 56 - Zeile 66; Abbildungen * * — — — — — | 1-9 | |

| RECHERCHIERTE SACHGEBIETE (Int. Cl.5) |
|---|
| A 61 C |

Der vorliegende Recherchenbericht wurde für alle Patentansprüche erstellt

| Recherchenort | Abschlußdatum der Recherche | Prüfer |
|---|---|---|
| Den Haag | 04 November 91 | CLARKSON P.M. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------------------
& : Mitglied der gleichen Patentfamilie, übereinstimmendes Dokument